# EUROPÄISCHE PATENTSCHRIFT

(11) **EP 2 339 307 B1**
(45) Veröffentlichungstag und Bekanntmachung des Hinweises auf die Patenterteilung: **28.12.2016**
(21) Anmeldenummer: 11159819.9
(22) Anmeldetag: 15.06.2007
(51) Int. Cl.: G01K 13/02

(54) **Temperaturmessvorrichtung**
Temperature measuring device
Dispositif de mesure de température

(30) Priorität: 06.07.2006 DE 102006031343
(43) Veröffentlichungstag der Anmeldung: 29.06.2011
(62) Teilanmeldung aus: 07764375.7
(73) Patentinhaber: EPCOS AG, 81669 München (DE)
(72) Erfinder: Ostrick, Bernhard, 14513, Teltow (DE); Balzer, Peter, 10179, Berlin (DE); Grundmann, Wolfgang, 16547, Birkenwerder (DE)
(74) Vertreter: Epping - Hermann - Fischer

(56) Entgegenhaltungen:
- DE-A1- 19 608 675
- JP-A- 2002 005 757
- JP-A- 2006 058 231

## Beschreibung

Temperaturfühler sind z. B. aus der Druckschrift DE 10340636 B3 bekannt.

Die Druckschrift JP 2002 005757 A offenbart eine Temperaturmessvorrichtung, die ein Rohrstück mit einer in das Innere des Rohrstücks ragenden Ausbuchtung aufweist, wobei in der Ausbuchtung ein Sensorelement eingebettet ist. Das Rohrstück ist zur Durchführung eines Mediums vorgesehen, dessen Temperatur mit Hilfe des Sensorelements erfassbar ist.

In der Druckschrift DE 196 08 675 A1 ist eine Temperaturmessvorrichtung beschrieben, bei der ein Temperaturfühler in einem Rohrstutzen angeordnet ist, wobei der Rohrstutzen mit einer Rohrleitung derart verbunden ist, dass eine T-Rohrkombination entsteht. Ein inneres Stutzende ragt dabei in das Leitungsprofil der Rohrleitung hinein.

Die Druckschrift JP 2006 058231 A zeigt eine Temperaturmessvorrichtung, bei dem eine Schutzröhre mit einem Fühlkopf in eine Ausnehmung eines Rohrstücks eingesetzt ist. Die Schutzröhre ragt dabei in das Innere des Rohrstücks.

Eine zu lösende Aufgabe besteht darin, eine Messvorrichtung anzugeben, die zur Erfassung der Temperatur eines in einem Leitungssystem strömenden Mediums geeignet ist.

Es wird eine Temperaturmessvorrichtung mit einem Fühlkopf und einem Rohrstück angegeben, in dem der Fühlkopf eingebettet, vorzugsweise eingegossen, ist. Das Rohrstück ist zur Durchführung eines Mediums vorgesehen, dessen Temperatur mittels des Fühlkopfs erfasst werden soll.

Der Fühlkopf ist vorzugsweise in der Wandung, d. h. im Mantel des Rohrstücks eingebettet.

Das Medium, das einer Temperaturmessung unterzogen werden soll, ist vorzugsweise ein durch das Röhrstück strömendes Medium wie z. B. Luft, Gas, Dampf oder eine Flüssigkeit. Die strömende Flüssigkeit kann z. B. Wasser, Öl, Kraftstoff, Lauge usw. umfassen.

Die Innenseite des Rohrstücks weist im Bereich des Fühlkopfs insbesondere keine abzudichtenden Schnittstellen, d. h. Grenzflächen zwischen zwei aneinander grenzenden Teilen, auf. Eine schnittstellenfreie Integration des Fühlkopfs in einem Teil eines Leitungssystems erlaubt eine nicht invasive Temperaturmessung eines durch das Leitungssystem durchströmenden Mediums. Eine solche Messung ist vorteilhaft, da dabei - im Gegensatz zu einer invasiven Temperaturmessung, bei der ein Fühlkopfs durch die Wand des Leitungssystems durchgeführt wird - keine Undichtigkeiten entstehen können.

Der Fühlkopf ist erfindungsgemäß in einem Bereich der Wand des Rohrstücks eingeschlossen, der keine nach innen ragenden Hervorhebungen aufweist.

Das Rohrstück kann stirnseitig angeordnete Rastvorrichtungen aufweisen, die insbesondere das Aufbringen von Schläuchen eines Leitungssystems ermöglichen. Beispielsweise kann das Rohrstück der angegebenen Messvorrichtung zwischen zwei Schläuchen angeordnet sein, durch die das Kühlwasser zur Kühlung eines Motors fließt.

Das Rohrstück kann auch aus einem Material mit elastischen Eigenschaften ausgebildet sein. Ein derart ausgebildetes Rohrstück kann als Dichtung zwischen zwei Rohren verwendet werden.

Das Rohrstück kann stirnseitig einen größeren Durchmesser als in den angrenzenden Bereichen, eine Abschrägung und/oder eine Rippung aufweisen.

Das Rohrstück ist vorzugsweise mit einer Steckervorrichtung monolithisch verbunden, in der elektrische Zuleitungen integriert sind, die mit dem Fühlkopf leitend verbunden sind. Durch die monolithische Verbindung des Rohrstücks und der Steckervorrichtung kann auf die Montage der Steckervorrichtung am Rohrstück mittels Haltevorrichtungen verzichtet werden.

Im Rohrstück ist vorzugsweise mindestens ein wärmeleitender Körper eingebettet, der den Fühlkopf berührt. Die Wärmeleitfähigkeit des wärmeleitenden Körpers übersteigt diejenige des Rohrstücks.

Der wärmeleitende Körper ist vorzugsweise flächig ausgebildet, um die Temperatur des durch das Rohr fließenden Mediums an verschiedenen Stellen des Rohrstücks aufzunehmen und zu mitteln. Der wärmeleitende Körper ist vorzugsweise im Rohrstück eingebettet und in der Nähe der inneren Fläche des Rohrstücks angeordnet. Es ist vorteilhaft, wenn der wärmeleitende Körper zumindest einem Teil des Rohrumfangs folgt und z. B. wie ein Ring oder Teilring ausgebildet ist. Der wärmeleitende Körper kann sich aber auch in Längsrichtung des Rohrstücks erstrecken.

Der wärmeleitende Körper umfasst vorzugsweise Metall. Er kann aber auch als ein Spritzgussteil z. B. aus einem Kunststoff ausgebildet sein, der mit Metallpartikeln gefüllt ist. Auch andere Materialien mit einer hohen thermischen Leitfähigkeit sind dafür geeignet.

Im folgenden Text sind weitere Aspekte der vorliegenden Offenbarung beschrieben, wobei die einzelnen Aspekte nummeriert sind, um die Bezugnahme auf Merkmale anderer Aspekte zu erleichtern.
1. Eine Temperaturmessvorrichtung
   - mit einem Fühlkopf und einem Rohrstück, in dem der Fühlkopf eingebettet ist,
   - wobei das Rohrstück zur Durchführung eines Mediums vorgesehen ist, dessen Temperatur mittels des Fühlkopfs erfassbar ist.
2. Die Temperaturmessvorrichtung nach Aspekt 1
   - wobei die Innenseite des Rohrstücks im Bereich des Fühlkopfs schnittstellenfrei ist.
3. Die Temperaturmessvorrichtung nach einem der Aspekte 1 bis 2,
   - wobei das Rohrstück stirnseitig Rastvorrichtungen aufweist.
4. Die Temperaturmessvorrichtung nach einem der Aspekte 1 bis 3
   - wobei das Rohrstück mit einer Steckervorrichtung monolithisch verbunden ist, in der elektrische Zuleitungen integriert sind, die mit dem Fühlkopf leitend verbunden sind.
5. Die Temperaturmessvorrichtung nach einem der Aspekte 1 bis 4,
   - wobei das Rohrstück in einem umlaufenden Bereich, der den Fühlkopf umfasst, einen größeren Durchmesser als in den angrenzenden Bereichen aufweist.
6. Die Temperaturmessvorrichtung nach einem der Aspekte 1 bis 5,
   - wobei das Rohrstück als Grundmaterial ein Material mit elastischen Eigenschaften umfasst.
7. Die Temperaturmessvorrichtung nach einem der Aspekte 1 bis 6,
   - wobei das Rohrstück ein Spritzgussteil ist.
8. Die Temperaturmessvorrichtung nach einem der Aspekte 1 bis 7,
   - wobei der Fühlkopf ein NTC-Element umfasst.
9. Die Temperaturmessvorrichtung nach einem der Aspekte 1 bis 8,
   - wobei im Rohrstück mindestens ein wärmeleitender Körper eingebettet ist, der den Fühlkopf berührt,
   - wobei die Wärmeleitfähigkeit des wärmeleitenden Körpers diejenige des Rohrstücks übersteigt.
10. Die Temperaturmessvorrichtung nach Aspekt 9,
   - wobei der wärmeleitende Körper flächig ausgebildet ist. Vorteilhafte Ausführungsformen der Messvorrichtung werden anhand von schematischen und nicht maßstabsgetreuen Figuren erläutert. Es zeigen:
      Figur 1 in einer Seitenansicht eine Messvorrichtung mit einem Rohrstück, das mit einer Steckerverbindung monolithisch verbunden ist;
      Figur 2 in einer perspektivischen Seitenansicht die Messvorrichtung gemäß der Figur 1;
      Figur 3 in einer weiteren Ansicht ein nicht erfindungsgemäßes Beispiel der Messvorrichtung gemäß den Figuren 1 und 2, die einen in eine Hervorhebung des Rohrstücks eingegossenen Fühlkopf aufweist;
      Figur 4 in einer weiteren Ansicht eine Variante der Messvorrichtung gemäß den Figuren 1 und 2, die einen in das Rohrstück eingegossenen Fühlkopf aufweist;
      Figuren 5, 6 verschiedene perspektivische Ansichten des Gehäuses einer an den Fühlkopf angeschlossenen Steckerverbindung.

Die Temperaturmessvorrichtung umfasst einen Fühlkopf 1, der vorzugsweise ein NTC-Sensorelement umfasst. NTC steht für Negative Temperature Coefficient. Die Temperaturmessvorrichtung umfasst ferner ein Rohrstück 2, in dem der Fühlkopf 1 eingeschlossen ist. Der Fühlkopf 1 ist vorzugsweise im Körper des Rohrstücks derart eingegossen, dass dabei keine Schnittstellen entstehen. Insbesondere weist die Innenseite des Rohrstücks keine abzudichtenden Schnittstellen zwischen dem Rohrstück und dem Fühlelement auf.

Der Fühlkopf 1 ist mit elektrischen Zuleitungen 11 verlötet, die leitend mit den elektrischen Anschlüssen 31 der Temperaturmessvorrichtung verbunden sind. Die Zuleitungen 11 und die Anschlüsse 31 sind in einer Steckerverbindung 3 integriert, die vor dem Formen des Rohrstücks ausgeformt ist. Die Steckerverbindung 3 umfasst ein Gehäuse 30, das vorzugsweise als Formteil verfügbar ist. In diesem Gehäuse sind die Zuleitungen 11 durchgeführt. Im Gehäuse 30 sind außerdem zumindest ein Teil der Anschlüsse 31 angeordnet. Auch der Fühlkopf 1 kann in einer Variante teilweise im Gehäuse 30 angeordnet sein.

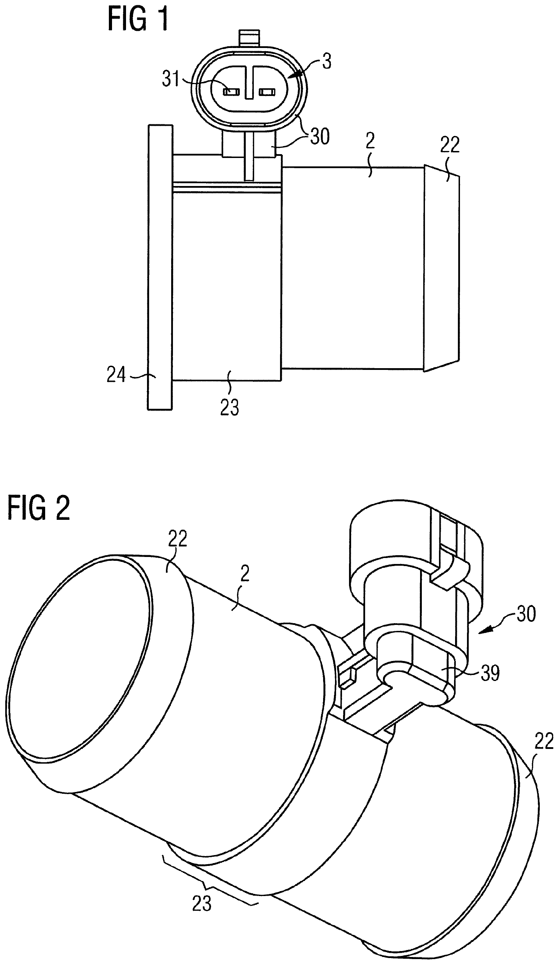

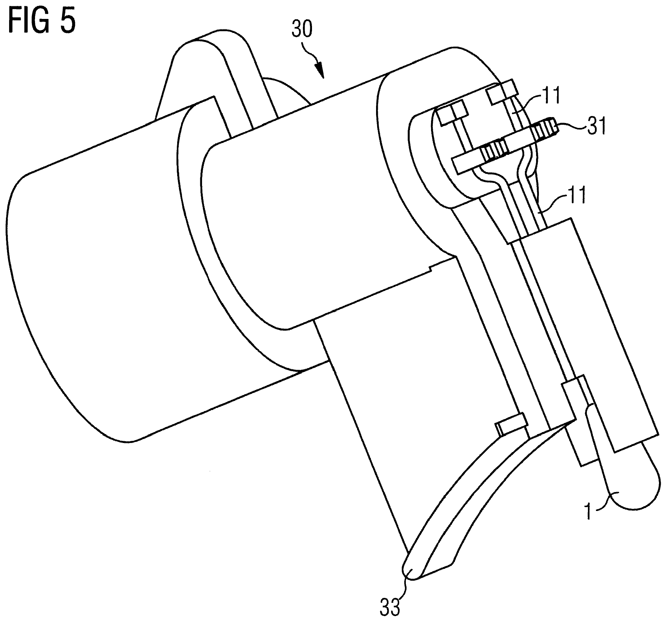

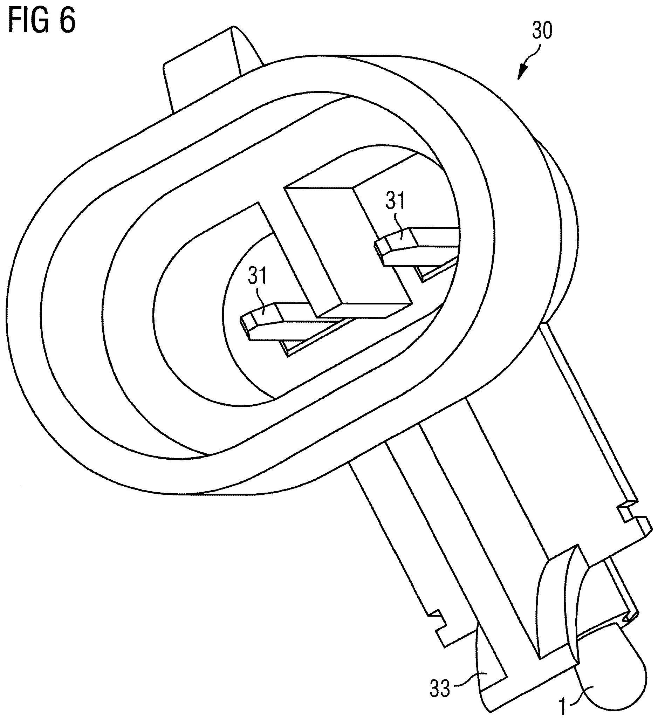

Das noch nicht in das Rohrstück 2 integrierte Gehäuse 30 ist in den Figuren 5 und 6 gezeigt. Die Zuleitungen 11 liegen frei. Der in Fig. 2 sichtbare Teil 39 des Gehäuses wird zusammen mit dem Rohrstück 2, d. h. im gleichen Verfahrensschritt erzeugt, wobei die Zuleitungen 11 in eine Gussmasse eingebettet werden. Der Teil 39 des Gehäuses 30 und das Rohrstück 2 sind in einem Stück ausgebildet.

Das Gehäuse 30 der Steckerverbindung 3 umfasst vorzugsweise einen Sockel 33, der monolithisch mit dem Rohrstück 2 verbunden ist. Der Sockel 33 weist eine Krümmung auf, die vorzugsweise einem Kreisbogen folgt, der sich aus dem Verlauf des Rohrstücks 2 ergibt.

Das Rohrstück 2 wird vorzugsweise als Formteil in einem Press- oder Spritzgussverfahren hergestellt, wobei der Sockel 33 der Steckerverbindung 3 vorzugsweise durch die Formmasse zumindest teilweise umpresst wird.

Die Steckerverbindung 3 ist an eine weitere, komplementär zu ihr ausgebildete Steckerverbindung anschließbar, die leitend mit einer Schaltung zur Auswertung der durch den Fühlkopf 1 erfassten Messsignale verbunden ist. Die Längsachse der Steckerverbindung 3 ist in den gezeigten Varianten quer zur Längsachse des Rohrstücks 2 angeordnet. Sie kann aber auch parallel oder schräg zur Längsachse des Rohrstücks 2 ausgerichtet werden.

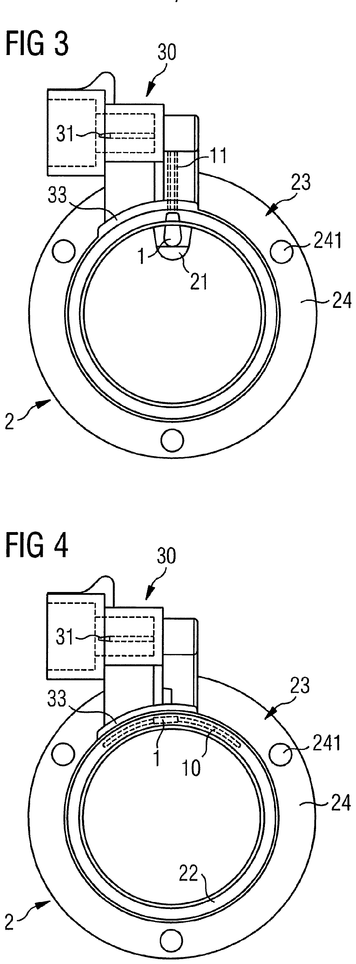

Der Fühlkopf 1 kann wie in der nicht erfindungsgemäßen Variante gemäß der Figur 3 in einer Hervorhebung 21 des Rohrstücks 2 eingeschlossen sein, die in die Innenöffnung des Rohrstücks hineinragt, aber trotzdem ein Bestandteil des Rohrstücks ist.

Der Fühlkopf 1 kann erfindungsgemäß wie in der Variante gemäß der Figur 4 in der Seitenwand des Rohrstücks 2 eingeschlossen sein, die im Bereich des Fühlkopfs vorzugsweise keine Hervorhebungen aufweist.

Im Rohrstück 2 kann mindestens ein gut wärmeleitender Körper 10 vorzugsweise aus Metall eingebettet sein, der den Fühlkopf 1 berührt. Unter einem gut wärmeleitenden Körper versteht man einen Körper, dessen Wärmeleitfähigkeit größer als diejenige der Umgebung (d. h. des Rohrstücks) ist.

Der wärmeleitende Körper 10 ist vorzugsweise komplett in der Wandung des Rohrstücks eingebettet. Der wärmeleitende Körper 10 ist flächig, in dieser Variante in Form eines Teilrings ausgebildet. Der wärmeleitende Körper kann auch die Form eines Topfs haben, in dem vorzugsweise ein Teil des Fühlkopfs 1 angeordnet ist.

Das Rohrstück 2 kann beidseitig an weitere Rohre angeschlossen werden und wird dann ein Bestandteil eines Leitungssystems zur Durchführung eines - vorzugsweise das Leitungssystem durchströmenden - Mediums, dessen Temperatur gemessen werden soll. Das Medium kann ein Gas oder eine Flüssigkeit umfassen.

Das Rohrstück kann als Stutzen benutzt werden, auf dessen Stirnseiten Schläuche aufgezogen werden. Stirnseitige Bereiche 22 des Rohrstücks 2 weisen vorzugsweise Rastvorrichtungen auf.

Das Rohrstücks 2, der den Fühlkopf 1 umfasst, weist im Bereich 23 eine Verdickung auf, da in diesem Bereich vorzugsweise ein Sockel der Steckerverbindung 3 eingegossen ist.

Das Rohrstück 2 kann einen Kragen 24 aufweisen, in dem Öffnungen 241 zur Aufnahme von Befestigungselementen angeordnet sind. Somit kann das Rohrstück an einem Träger befestigt werden.

### Bezugszeichenliste

- 1: Fühlkopf
- 10: wärmeleitende Körper
- 11: elektrische Zuleitungen
- 2: Rohrstück
- 21: Hervorhebung, in der der Fühlkopf 1 eingeschlossen ist
- 22: stirnseitige Bereiche des Rohrstücks 2
- 23: Bereich des Rohrstücks 2, der den Fühlkopf umfasst
- 24: Kragen
- 241: Öffnungen zur Aufnahme von Befestigungselementen
- 3: Steckerverbindung
- 30: Gehäuse der Steckerverbindung 3
- 31: elektrischer Anschluss
- 33: Sockel
- 39: Teil des Gehäuses 30

## Patentansprüche

1. Temperaturmessvorrichtung
- mit einem Fühlkopf (1) und einem Rohrstück (2), in dem der Fühlkopf (1) eingebettet ist,
- wobei das Rohrstück (2) zur Durchführung eines Mediums vorgesehen ist, dessen Temperatur mittels des Fühlkopfs (1) erfassbar ist,
- wobei das Rohrstück (2) stirnseitig Rastvorrichtungen aufweist, und
- wobei der Fühlkopf in einer Seitenwand des Rohrstücks eingeschlossen ist, wobei die Seitenwand des Rohrstücks im Bereich des Fühlkopfs keine Hervorhebung aufweist.

2. Temperaturmessvorrichtung nach Anspruch 1,
- wobei die Innenseite des Rohrstücks (2) im Bereich des Fühlkopfs (1) schnittstellenfrei ist.

3. Temperaturmessvorrichtung nach einem der Ansprüche 1 bis 2,
- wobei das Rohrstück (2) mit einer Steckervorrichtung (3) monolithisch verbunden ist, in der elektrische Zuleitungen (11) integriert sind, die mit dem Fühlkopf (1) leitend verbunden sind.

4. Temperaturmessvorrichtung nach einem der Ansprüche 1 bis 3,
- wobei das Rohrstück (2) in einem umlaufenden Bereich (23), der den Fühlkopf (1) umfasst, einen größeren Durchmesser als in den angrenzenden Bereichen aufweist.

5. Temperaturmessvorrichtung nach einem der Ansprüche 1 bis 4,
- wobei das Rohrstück (2) als Grundmaterial ein Material mit elastischen Eigenschaften umfasst.

6. Temperaturmessvorrichtung nach einem der Ansprüche 1 bis 5,
- wobei das Rohrstück (2) ein Spritzgussteil ist.

7. Temperaturmessvorrichtung nach einem der Ansprüche 1 bis 6,
- wobei der Fühlkopf (1) ein NTC-Element umfasst.

8. Temperaturmessvorrichtung nach einem der Ansprüche 1 bis 7,
- wobei im Rohrstück (2) mindestens ein wärmeleitender Körper eingebettet ist, der den Fühlkopf (1) berührt,
- wobei die Wärmeleitfähigkeit des wärmeleitenden Körpers diejenige des Rohrstücks (2) übersteigt.

9. Temperaturmessvorrichtung nach Anspruch 8,
- wobei der wärmeleitende Körper flächig ausgebildet ist.

## Claims

1. Temperature measuring apparatus
- having a sensing head (1) and a pipe piece (2) in which the sensing head (1) is embedded,
- with the pipe piece (2) being provided for carrying a medium of which the temperature can be detected by means of the sensing head (1),
- with the pipe piece (2) having latching apparatuses at its front face, and
- with sensing head being enclosed in a side wall of the pipe piece, with the side wall of the pipe piece not having a protrusion in the region of the sensing head.

2. Temperature measuring apparatus according to Claim 1,
- with the inner face of the pipe piece (2) not having an interface in the region of the sensing head (1).

3. Temperature measuring apparatus according to either of Claims 1 and 2,
- with the pipe piece (2) being monolithically connected to a plug apparatus (3) in which electrical feed lines (11) which are conductively connected to the sensing head (1) are integrated.

4. Temperature measuring apparatus according to one of Claims 1 to 3,
- with the pipe piece (2) having a larger diameter in a circumferential region (23), which comprises the sensing head (1), than in the adjoining regions.

5. Temperature measuring apparatus according to one of Claims 1 to 4,
- with the pipe piece (2) comprising a material with elastic properties as base material.

6. Temperature measuring apparatus according to one of Claims 1 to 5,
- with the pipe piece (2) being an injection-moulded part.

7. Temperature measuring apparatus according to one of Claims 1 to 6,
- with the sensing head (1) comprising an NTC element.

8. Temperature measuring apparatus according to one of Claims 1 to 7,
- with at least one thermally conductive body which touches the sensing head (1) being embedded in the pipe piece (2),
- with the thermal conductivity of the thermally conductive body exceeding that of the pipe piece (2).

9. Temperature measuring apparatus according to Claim 8,
- with the thermally conductive body being flat.

## Revendications

1. Dispositif de mesure de température présentant :
une tête sensible (1) et une pièce tubulaire (2) dans laquelle la tête sensible (1) est incorporée,
la pièce tubulaire (2) étant prévue pour le passage d'un fluide dont la température peut être détectée au moyen de la tête sensible (1),
la pièce tubulaire (2) présentant sur son côté frontal des dispositifs d'encliquetage,et
la tête sensible étant incluse dans une paroi latérale de la pièce tubulaire, la paroi latérale de la pièce tubulaire ne présentant aucun rehaussement dans la région de la tête sensible.

2. Dispositif de mesure de température selon la revendication 1, dans lequel le côté intérieur de la pièce tubulaire (2) ne présente pas d'interface au niveau de la tête sensible (1).

3. Dispositif de mesure de température selon l'une quelconque des revendications 1 à 2, dans lequel la pièce tubulaire (2) est connectée d'une seule pièce à un dispositif d'enfichage (3) dans lequel sont intégrées des lignes d'alimentation électriques (11) qui sont connectées de manière conductrice à la tête sensible (1).

4. Dispositif de mesure de température selon l'une des revendications 1 à 3, dans lequel la pièce tubulaire (2) présente dans une partie périphérique (23) qui inclut la tête sensible (1) un diamètre plus grand que dans les parties adjacentes.

5. Dispositif de mesure de température selon l'une des revendications 1 à 4, dans lequel la pièce tubulaire (2) comporte comme matériau de base un matériau à propriétés élastiques.

6. Dispositif de mesure de température selon l'une des revendications 1 à 5, dans lequel la pièce tubulaire (2) est une pièce moulée par injection.

7. Dispositif de mesure de température selon l'une des revendications 1 à 6, dans lequel la tête sensible (1) comprend un élément NTC.

8. Dispositif de mesure de température selon l'une des revendications 1 à 7, dans lequel au moins un corps conducteur de chaleur, en contact avec la tête sensible (1), est incorporé dans la pièce tubulaire (2),
la conductivité thermique du corps conducteur de chaleur est supérieure à celle de la pièce tubulaire (2).

9. Dispositif de mesure de température selon la revendication 8, dans lequel le corps conducteur de chaleur a une configuration aplatie.
